# FASCICULE DE BREVET EUROPEEN

(11) **EP 3 561 832 B1**
(45) Date de publication et mention de la délivrance du brevet: **19.08.2020**
(21) Numéro de dépôt: 19167033.0
(22) Date de dépôt: 03.04.2019
(51) Int. Cl.: H01H 3/30

(54) **MODULE DE TRANSMISSION D'UN EFFORT**
KRAFTÜBERTRAGUNGSMODUL
MODULE FOR TRANSMITTING A FORCE

(30) Priorité: 26.04.2018 FR 1853683
(43) Date de publication de la demande: 30.10.2019
(73) Titulaire: Schneider Electric Industries SAS, 92500 Rueil Malmaison (FR)
(72) Inventeur: PERRIN, DENIS, 38500 SAINT NICOLAS DE MARCHERIN (FR)
(74) Mandataire: Brevalex

(56) Documents cités:
- EP-A2- 2 269 772
- US-A1- 2013 062 175
- US-A1- 2016 343 520

## Description

### DOMAINE TECHNIQUE

La présente invention concerne un module de transmission d'effort, et notamment un module de transmission à double cliquet. Plus particulièrement, la présente invention concerne un module de transmission d'effort destiné à transmettre un effort à un système d'accumulation d'énergie mécanique, notamment à un ressort de fermeture d'un appareil électrique de coupure, tel qu'un disjoncteur, un interrupteur ou un sectionneur.

### ÉTAT DE LA TECHNIQUE ANTÉRIEURE

Un module de transmission d'effort connu de l'état de la technique comprend :
- au moins une roue dentée liée de manière fixe à un arbre principal, adapté pour transmettre un effort à un système d'accumulation d'énergie via l'arbre principal,
- un système d'entrainement en rotation de la roue dentée selon un sens de rotation, dit sens direct, autour de l'axe principal.

En général, le système d'accumulation d'énergie est un système d'accumulation d'énergie mécanique, et notamment un ressort de fermeture d'un dispositif de coupure de courant tel qu'un disjoncteur.

Le système d'entrainement peut notamment comprendre des systèmes à cliquets.

En particulier, les documents [1] et [2] cités à la fin de la description, proposent chacun un système d'entrainement pourvu de plusieurs cliquets. Cependant, leur agencement et leur mode d'entrainement n'ouvrent pas la voie à une mise en rotation sans à-coups de la roue dentée, et limitent de facto la durabilité mécanique du module de transmission.

A cet égard, l'émergence des énergies renouvelables, et la multiplication du nombre de sources décentralisées de production d'énergie, impose des manœuvres bien plus fréquentes des appareils électriques de coupure, et par voie de conséquence du module de transmission d'effort. Il est ainsi nécessaire de pouvoir disposer d'un module de transmission d'effort capable d'effectuer par exemple 30000 cycles contre 10000 aujourd'hui.

Un train épicycloïdal, en lieu et place des systèmes à cliquet, a pu être mis en œuvre pour pallier les problèmes susmentionnés.

Cependant, un tel système d'entrainement n'est pas satisfaisant. En effet, un train épicycloïdal comprend un nombre important de pièces, et est par conséquent compliqué à mettre en œuvre sur le plan technique. Il est également relativement coûteux.

En particulier, les pièces composant le train épicycloïdal comprennent notamment des engrenages dont la fabrication nécessite un degré de précision particulièrement élevé pénalisant d'autant leur coût de fabrication.

Un but de la présente invention est donc de proposer un module de transmission d'effort plus simple à mettre en œuvre que le module de transmission connu de l'état de la technique.

Un autre but de la présente invention est également de proposer un module de transmission d'effort présentant une durabilité mécanique appréciable, et notamment capable de pouvoir endurer au moins 30000 cycles.

Un autre but de la présente invention est également de proposer un module de transmission d'effort dans lequel l'effort d'entrainement par une pluralité de cliquets de la roue dentée peut être lissé de manière à limiter l'usure du module de transmission et de sa motorisation.

Un autre but de la présente invention est également de proposer un module de transmission d'effort permettant un actionnement manuel.

Enfin, un autre but de la présente invention est de proposer un module de transmission d'effort dont les coûts fabrication et de mise en œuvre sont optimisés. Le document EP2269772 décrit un dispositif selon le préambule de la revendication 1.

### EXPOSÉ DE L'INVENTION

Les buts de la présente invention sont, au moins en partie, atteints par un module de transmission d'un effort comprenant :
- au moins une roue dentée liée de manière fixe à un arbre principal s'étendant selon un axe principal XX' ;
- au moins un premier porte-cliquet et un second porte-cliquet pourvus, respectivement, d'un premier cliquet et d'un second cliquet, chacun des premier cliquet et second cliquet étant agencé pour, lorsqu'il est activé, entrainer la roue dentée en rotation selon un sens, dit sens direct, autour de l'axe principal par appui du cliquet considéré contre une dent de la roue dentée ;
- au moins deux cames, liées fixement entre elles, dites, respectivement, première came et seconde came agencées pour actionner, respectivement, le premier cliquet selon une première course angulaire autour d'un axe YY' de la première came, et le second cliquet selon une seconde course angulaire autour de l'axe YY' de la seconde came différente de la première course angulaire.

Selon un mode de mise en œuvre, la première course angulaire et la seconde course angulaire présentent un recouvrement nul, et leur somme fait 360°.

Selon un mode de mise en œuvre, la première course angulaire et la seconde course angulaire sont chacune égales à 180°.

Selon un mode de mise en œuvre, les au moins deux cames sont agencées pour que l'activation de l'un et/ou l'autre des premier et second cliquets par la came destinée à l'activer soit directement précédée d'une phase d'engagement dudit cliquet par cette même came, la phase d'engagement comprenant la mise en appui du cliquet considéré contre une dent de l'au moins une roue dentée selon une course angulaire d'engagement de ladite came.

Selon un mode de mise en œuvre, les au moins deux cames sont agencées pour que l'activation de l'un et/ou l'autre des premier et second cliquets par la came destinée à l'activer soit directement suivie d'une phase de désengagement dudit cliquet par cette même came, la phase de désengagement comprenant une diminution de l'appui du cliquet contre la dent selon une loi de décroissance continue dudit appui selon une course angulaire de désengagement de ladite came.

Selon un mode de mise en œuvre, le premier porte-cliquet et le second porte cliquet sont chacun en liaison pivot avec l'arbre principal.

Selon un mode de mise en œuvre, les au moins deux cames sont solidaires d'un arbre à cames s'étendant selon l'axe YY' essentiellement parallèle à l'axe principal XX'.

Selon un mode de mise en œuvre, le premier porte-cliquet et le second porte-cliquet sont chacun pourvus d'un galet, dits respectivement, premier galet et second galet, contre lesquels viennent en butée selon leur contour, respectivement, la première came et la seconde came, la première came et la seconde came exerçant l'activation, respectivement, du premier cliquet et du second cliquet, via respectivement le premier galet et le second galet, et leurs porte-cliquets respectifs.

Selon un mode de mise en œuvre, l'au moins une roue dentée comprend une première roue dentée et une seconde roue dentée, avantageusement identiques, agencées pour être entraînées en rotation, respectivement, par le premier cliquet et le second cliquet.

Selon un mode de mise en œuvre, une révolution complète autour de l'axe YY' de l'ensemble formé par les première et seconde cames induit la rotation de l'au moins une roue dentée selon une course angulaire correspondant à une dent de l'au moins une roue dentée.

Selon un mode de mise en œuvre, le module de transmission comprend des moyens d'entrainement en rotation autour de l'axe YY' des au moins deux cames, les moyens d'entrainement comprennent avantageusement un moteur et un réducteur (motoréducteur) ou une manivelle.

Selon un mode de mise en œuvre, le premier porte-cliquet et/ou le second porte-cliquet sont également adaptés pour être manœuvrés de manière manuelle.

Selon un mode de mise en œuvre, l'arbre principal comprend deux extrémités dont au moins une est destinée à transférer un effort mécanique à un système d'accumulation mécanique.

Selon un mode de mise en œuvre, le système de d'accumulation mécanique comprend un ressort de compression.

L'invention concerne également un appareil électrique comprenant un module de transmission d'un effort selon la présente invention.

### BRÈVE DESCRIPTION DES DESSINS

D'autres caractéristiques et avantages apparaîtront dans la description qui va suivre d'un module de transmission d'un effort selon l'invention, donnés à titre d'exemples non limitatifs, en référence aux dessins annexés dans lesquels :
- la figure 1 est une représentation schématique du module de transmission selon la présente invention, selon une vue en perspective ;
- la figure 2 est une représentation schématique en perspective du module de transmission, selon la présente invention, intégré dans un mécanisme de commande d'un appareil électrique de coupure ;
- la figure 3 est une représentation schématique du module de transmission, selon la présente invention, selon une vue en perspective ;
- les figures 4a à 4g sont des représentations schématiques des différentes séquences de fonctionnement du module de transmission dans son entièreté, selon une vue de profil, et notamment selon une vue de profil permettant l'observation de la première roue, du premier cliquet et de la première came ;
- les figures 5a à 5g sont des représentations schématiques selon des séquences de fonctionnement du module de transmission identiques, respectivement, au figures 4a à 4g, et également selon une vue de profil identique, le mécanisme associé à la première roue, au premier cliquet et à la première came étant toutefois supprimés de manière à permettre l'observation de la seconde roue, du second cliquet et de la seconde came ;
- la figure 6 est une représentation temporelle (axes horizontaux) des différentes phases de fonctionnement du module de transmission selon la présente invention, la course angulaire de la première came étant représentée dans la partie supérieure et celle de la seconde came dans la partie inférieure.

### EXPOSÉ DÉTAILLÉ DE MODES DE RÉALISATION PARTICULIERS

La présente invention propose un module de transmission d'effort qui comprend une roue dentée pourvue d'un axe principal destiné à transmettre l'effort à un système d'accumulation d'énergie mécanique.

Selon la présente invention, la roue dentée est entrainée en rotation par deux cliquets, dits premier cliquet et second cliquet, activés de manière indépendante et en alternance par deux cames, dites première et seconde came, solidaires d'un même arbre à cames.

En particulier, les profils de came sont agencés pour qu'un effort continu et sans à-coup soit exercé sur la roue dentée.

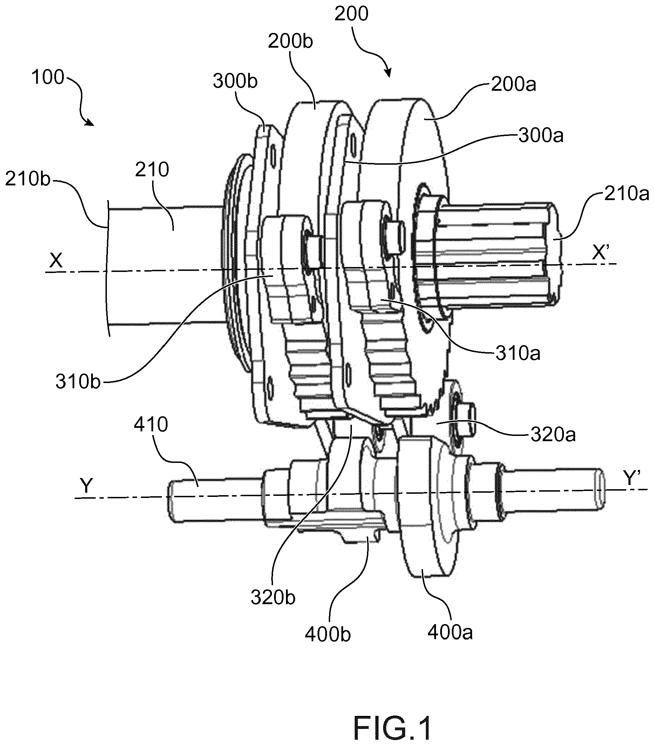

La présente invention va maintenant être décrite de manière détaillée et en relation avec les figures 1 à 3.

Le module de transmission 100 comprend au moins une roue dentée 200 solidaire d'un arbre principal 210 qui s'étend selon un axe principal XX' (figure 1).

Par « roue dentée », on entend une roue pourvue de dents sur au moins une partie de sa périphérie, par exemple sur la moitié de sa périphérie.

Il est également entendu qu'une roue dentée solidaire d'un arbre principal, implique au sens de la présente invention une liaison fixe entre ladite roue et ledit arbre. Toutefois, la liaison fixe n'empêche pas le démontage de l'au moins une roue dentée qui peut coulisser le long de l'arbre principal.

L'au moins une roue dentée 200 peut également comprendre une première roue dentée 200a et une seconde roue dentée 200b. Les première et seconde roues dentées 200a et 200b sont avantageusement identiques, parallèles entre elles, et selon la même orientation.

L'arbre principal 210 comprend une première extrémité 210a et une seconde extrémité 210b.

L'une ou l'autre des première et seconde extrémités 210a et 210b, par exemple la seconde extrémité 210b, comporte des cannelures ou dents qui sont destinées à transmettre l'effort à un système d'accumulation d'énergie mécanique.

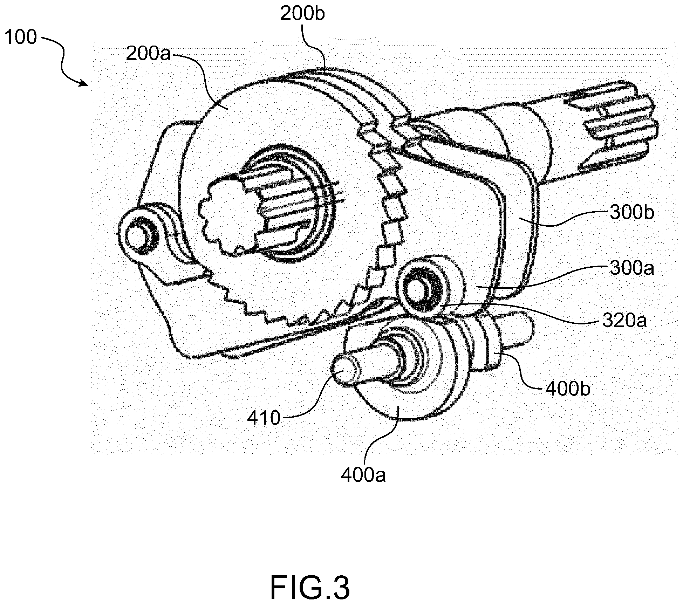

Le module de transmission 100 comprend au moins un premier porte-cliquet 300a et un second porte-cliquet 300b pourvus, respectivement, d'un premier cliquet 310a et d'un second cliquet 310b (figures 1 et 3).

Un porte-cliquet comprend par exemple une plaque, de préférence métallique sur laquelle est fixé le cliquet.

Le premier cliquet 310a et le second cliquet 310b sont agencés pour, lorsqu'ils sont activés, entrainer l'au moins une roue dentée 200 en rotation selon un premier sens autour de l'axe principal XX'.

Notamment, l'entrainement en rotation de l'au moins une roue dentée 200 est provoqué par appui du cliquet considéré contre une dent de l'au moins une roue dentée.

Il est donc entendu que l'entrainement en rotation de l'au moins une roue dentée par l'un ou l'autre des premier et second cliquets 310a et 310b, s'exécute par application d'un effort mécanique par le cliquet concerné contre une dent de ladite roue.

Il est entendu, au sens de la présente invention, que le premier cliquet et le second cliquet peuvent tous les deux agir sur la même roue ou agir chacun sur une roue différente. Par exemple, le premier cliquet 310a et le second cliquet 310b peuvent être agencés pour entrainer en rotation, respectivement, la première roue 200a et la seconde roue 200b.

Contrairement au train épicycloïdal connu de l'état de la technique, les porte-cliquets et cliquets sont techniquement simples à mettre en œuvre et ne nécessitent aucune précaution particulière, telle que la mise en œuvre d'un étage de démultiplication destiné à les protéger.

Par ailleurs, le premier porte-cliquet 300a et le second porte-cliquet 300b peuvent être identiques de sorte que leur intégration dans le module de transmission 100 en soit facilitée et que leur appairage avec les cames n'est pas nécessaire.

En outre, la mise en œuvre de porte-cliquets nécessite moins de pièces et est relativement économique par rapport à un train épicycloïdal.

Il est également entendu, sans qu'il soit nécessaire de le préciser, que le premier et le second cliquets sont chacun munis d'un système de rappel, notamment un ressort, agencé pour forcer le contact entre chaque cliquet et l'au moins une roue dentée.

Le système de rappel permet également de ramener le galet en butée contre la came dès lors que cette dernière n'agit plus sur ledit galet.

Le module de transmission 100 comprend également une première came 400a et une seconde came 400b liées par une liaison fixe (figure 1 à 3).

L'invention est décrite avec deux cames, toutefois l'homme du métier pourra étendre les principes énoncés à un plus grand nombre de cames.

Il est entendu, au sens de la présente invention, que les deux cames sont également agencées pour tourner autour d'un axe YY' (figure 1).

De manière avantageuse, l'axe YY' est essentiellement parallèle à l'axe principale XX'.

Toujours de manière avantageuse, les première et seconde cames 400a et 400b sont solidaires d'un arbre à cames 410 qui s'étend selon l'axe YY' (figures 1 à 3).

Le module de transmission 100 peut avantageusement comprendre des moyens d'entrainement en rotation autour de l'axe YY' des au moins deux cames. En particulier, les moyens d'entrainement peuvent comprendre une commande électrique qui agit sur un motoréducteur ou une manivelle.

La première came 400a et la seconde came 400b sont agencées pour activer en alternance, respectivement, le premier cliquet 310a et le second cliquet 310b via les porte-cliquets.

Par « activer en alternance », il doit être entendu que les deux cliquets agissent selon deux phases temporelles différentes, qui peuvent toutefois présenter un recouvrement. En d'autres termes, il peut exister un laps de temps globalement inférieur à chacune des deux phases temporelles au cours duquel les deux cliquets 310a et 310b sont activés et entrainent tous les deux l'au moins une roue dentée 200.

Il est entendu que l'activation de l'un ou l'autre des premier et second cliquets, respectivement, par la première came et la seconde came est fonction du profil de came et plus particulièrement du contour desdites première et seconde cames.

La première came 400a est notamment agencée pour actionner le premier cliquet 310a selon une course angulaire, dite première course angulaire, autour de l'axe YY'.

De manière équivalente, la seconde came 400b est agencée pour actionner le second cliquet 310b selon une course angulaire, dite seconde course angulaire, autour de l'axe YY'.

Par « course angulaire », on entend une gamme continue d'angles de rotation de l'ensemble formé par la première came et la seconde came. Il est entendu qu'une course angulaire peut prendre n'importe quelle valeur comprise entre 0° et 360°.

Le profil de la première came 400a selon la première course angulaire peut avantageusement être adapté pour que le premier cliquet impose un couple constant, pendant toute la durée de ladite première course, à l'au moins une roue dentée, et notamment la première roue dentée.

De manière équivalente, le profil de la seconde came 400b selon la seconde course angulaire peut avantageusement être adapté pour que le second cliquet impose un couple constant, pendant toute la durée de ladite seconde course, à l'au moins une roue dentée, et notamment la seconde roue dentée.

De manière particulièrement avantageuse, la première course angulaire et la seconde course angulaire présentent un recouvrement nul, et leur somme est égale à 360°.

Ainsi, lors d'une révolution complète de l'ensemble formé par la première came et la seconde came autour de l'axe YY', l'au moins une roue dentée et l'arbre à cames tournent essentiellement continûment avec peu ou pas d'à-coups.

Toujours de manière avantageuse, la première course angulaire et la seconde course angulaire sont chacune égales à 180°.

La combinaison de ces deux caractéristiques permet avantageusement de lisser, au moins en partie, l'effort s'exerçant sur les dents de chacune des première et seconde roue dentées, et par voie de conséquence, limiter les contraintes susceptibles d'endommager et/ou d'affecter la fiabilité des première et seconde roues dentées. Cet agencement permet également de préserver ainsi que de l'arbre à cames ainsi que son système d'entrainement (motoréducteur).

A titre d'exemple, une révolution complète autour de l'axe YY' de l'ensemble formé par les première et seconde cames 400a et 400b induit la rotation des première et seconde roues dentées selon une course angulaire correspondant à une dent de chacune de ces deux roues.

Selon un mode de réalisation avantageux, la première came et la seconde came peuvent être agencées pour que l'activation de l'un et/ou l'autre des premier et second cliquets par la came destinée à l'activer soit directement précédée d'une phase d'engagement dudit cliquet par cette même came. Une phase d'engagement comprend la mise en appui de l'un ou l'autre des premier et second cliquet contre une dent, respectivement, de la première roue dentée ou de la seconde roue dentée selon une course angulaire d'engagement de la came considérée.

Toujours selon un mode de réalisation avantageux, la première came et la seconde came peuvent être agencées pour que l'activation de l'un et/ou l'autre des premier et second cliquets par la came destinée à l'activer soit directement suivie d'une phase de désengagement dudit cliquet par cette même came, la phase de désengagement comprenant une diminution de l'appui du cliquet contre la dent selon une loi de décroissance continue dudit appui selon une course angulaire de désengagement de ladite came.

Il est entendu que les phases d'engagement et de désengagement sont relatives à un profil particulier de l'une et l'autre des première et seconde cames sur une course angulaire prédéterminée. Ces ajustements de profil sont à la portée de l'homme du métier et peuvent notamment correspondre à une augmentation et une diminution de l'effort exercé sur le cliquet.

Selon un mode de réalisation avantageux, le premier porte-cliquet 300a et le second porte-cliquet 300b sont chacun en liaison pivot avec l'arbre principal 210 (figure 1).

Notamment, chaque porte-cliquet 300a et 300b comprend une lumière dans laquelle est insérée l'arbre principal 210. Un tel agencement permet de conférer au module de transmission la compacité nécessaire à son utilisation dans un espace réduit.

Le premier porte-cliquet 300a et le second porte-cliquet 300b peuvent être chacun pourvus d'un galet, dits respectivement, premier galet 320a et second galet 320b (figure 1).

Les premier et second galets 320a et 320b permettent notamment les activations respectives des premier et second cliquets 310a et 310b. En particulier, la première came 400a et la seconde came 400b agissent, respectivement, sur le premier galet 320a et sur le second galet 320.

En fonctionnement, La première came 400a est en butée contre le premier galet 320a au niveau de son contour, dit premier contour. Ainsi, lors de sa rotation selon la première course angulaire, la première came 400a pousse le premier galet 320a et par voie de conséquence active le premier cliquet 310a (car le premier galet et le premier cliquet sont solidaires du même porte cliquet).

La seconde came 400b est en butée contre le second galet 320b au niveau de son contour, dit second contour. Ainsi, lors de sa rotation selon la seconde course angulaire, la seconde came 400a pousse le second galet 320b et par voie de conséquence active le second cliquet 310b (car le second galet et le second cliquet sont solidaires du même porte cliquet).

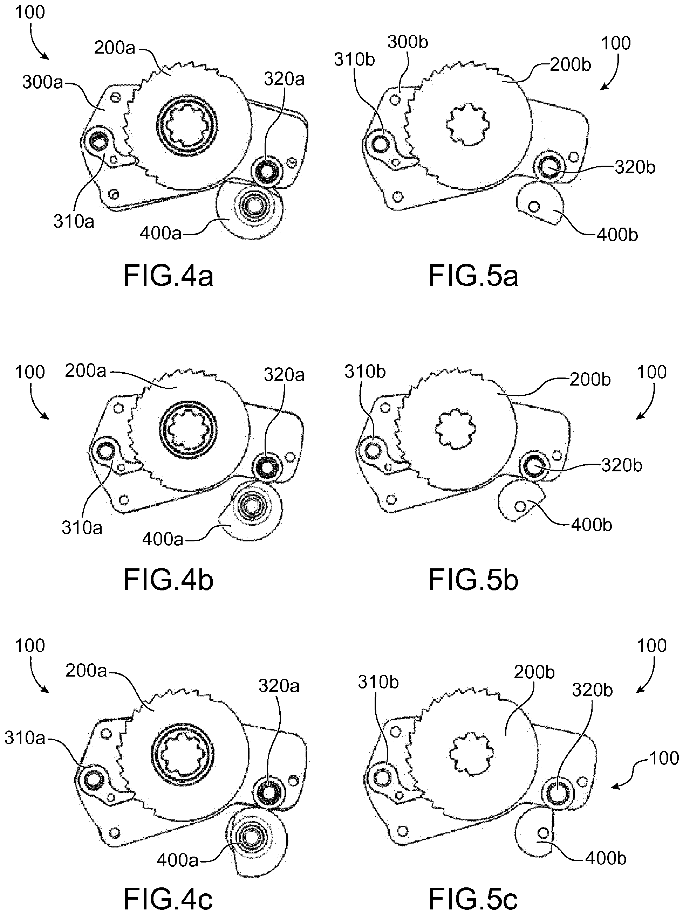

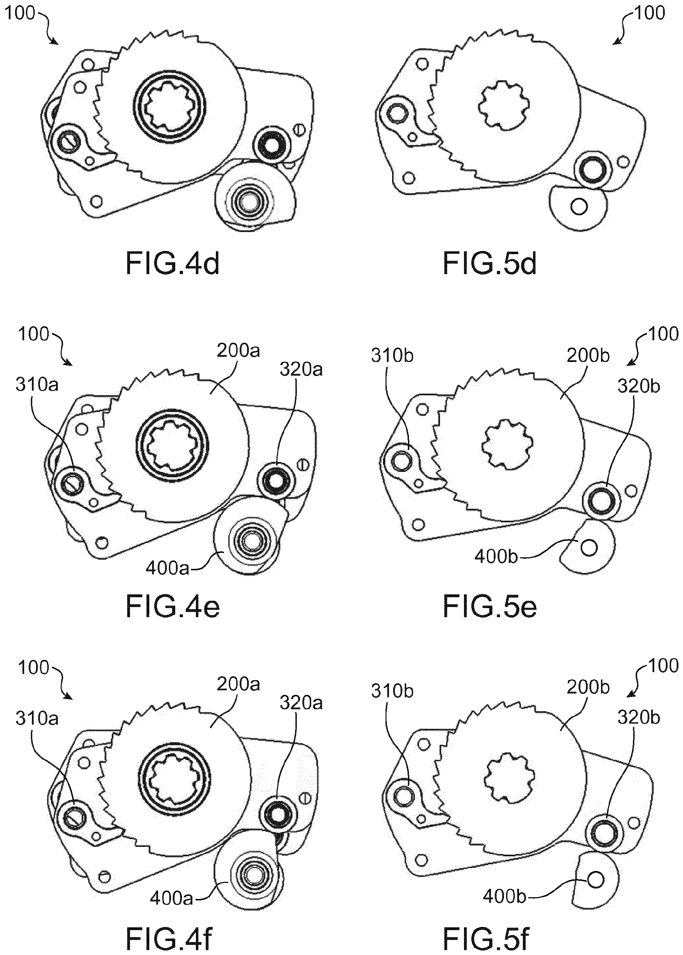

Les figures 4a à 4g sont des représentations schématiques des différentes séquences de fonctionnement du module de transmission dans son entièreté, selon une vue de profil, et notamment selon une vue de profil permettant l'observation de la première roue, du premier cliquet et de la première came.

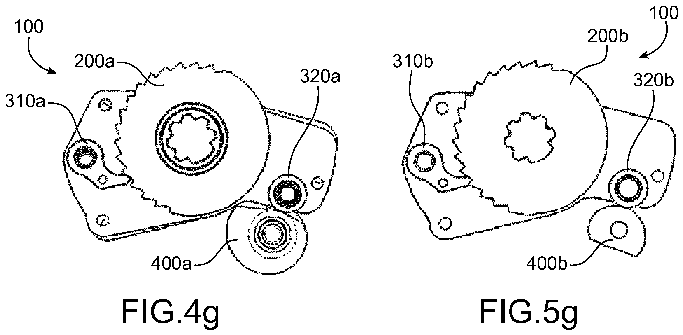

Les figures 5a à 5g sont des représentations schématiques selon des séquences de fonctionnement du module de transmission identiques, respectivement, au figures 4a à 4g, et également selon une vue de profil identique, le mécanisme associé à la première roue, au premier cliquet et à la première came étant toutefois supprimé de manière à permettre l'observation de la seconde roue, du second cliquet et de la seconde came.

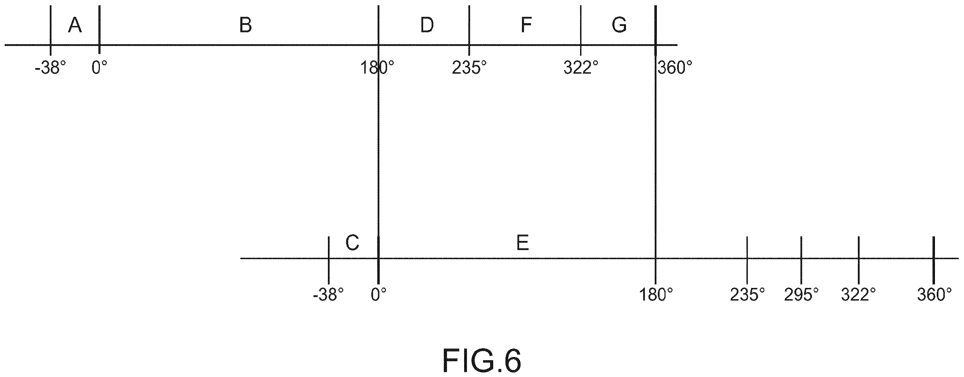

Les figures 4a à 4b correspondent à une phase d'engagement du premier cliquet 310a contre une dent de la première roue dentée 200a. A cet égard, le profil de la première came 400a associé à une phase d'engagement comprend une section, essentiellement, plane sur une course angulaire prédéterminée de ladite came, par exemple de 38° (Zone « A » de la figure 6).

Lors de cette phase, le premier cliquet 310a monte rapidement au contact d'une dent de la première roue dentée 200a, de manière à rattraper un éventuel jeu entre la dent et le premier cliquet 310a. En parallèle à cette phase d'engagement du premier cliquet, la seconde came 400b termine sa seconde course angulaire au cours de laquelle le second cliquet 310b est activé (figures 5a et 5b).

Les figures 4b à 4e correspondent à une phase dans laquelle le premier cliquet 310a est activé par la première came 400a pendant la première course angulaire. Le profil de came associé à cette phase peut par exemple correspondre à un profil de spirale divergente, par exemple sur une première course angulaire de l'ordre de 180° (Zone « B » de la figure 6).

Cette première course angulaire débute également avec une phase de désengagement du second cliquet 310b (figures 5b et 5c) selon une course angulaire par exemple de 55°.

Au cours de cette phase de désengagement, l'appui du second cliquet 310b sur la dent de la seconde roue dentée 200b diminue jusqu'à son annulation.

La phase de désengagement du second cliquet 310b peut être directement suivie d'une phase de repos (figures 5c et 5d) dudit cliquet au cours de laquelle ce dernier n'entraîne plus la seconde roue et saute sur la dent suivante.

Enfin, cette phase de repos est à son tour suivie d'une phase d'engagement du second cliquet 310b (Zone « C » de la figure 6, et figures 5d et 5e). Les termes de la phase d'engagement du second cliquet 310b et de la phase d'activation du premier cliquet 310a sont, avantageusement, concomitants.

La phase d'engagement du second cliquet 310b est directement suivie des phases de désengagement du premier cliquet 310a (zone « D » de la figure 6, et figures 4e et 4f), et d'activation du second cliquet 310b (zone « E » de la figure 6, figures 5e à 5g). La phase de désengagement du premier cliquet 310a correspond à une diminution du couple exercée par ledit cliquet sur la première roue 200a de sorte que le second cliquet prenne pleinement le relai d'entrainement de la seconde roue 200b (solidaire de la première roue).

À la suite de la phase de désengagement du premier cliquet 310a, s'en suit, successivement, pour le premier cliquet 310a, une phase de repos (zone « F » figure 6, et figures 4f et 4g) et, après un saut sur la dent suivante, à nouveau une phase d'engagement (zone « G » figure 6, et figure 4f) qui se termine, de manière simultanée avec la phase d'activation du premier cliquet.

La séquence de fonctionnement proposée ci-avant permet d'assurer la continuité d'entrainement des première et seconde roues dentées tout en minimisant, voire annulant, d'éventuels à-coups susceptibles d'intervenir, notamment sur lesdites première et seconde roues dentées. L'absence d'à-coups permet de préserver l'intégrité mécanique de l'ensemble du module de transmission d'effort, et notamment l'arbre à cames.

Ce mode de fonctionnement permet donc d'assurer la durabilité mécanique du module, et ainsi d'en augmenter la fiabilité.

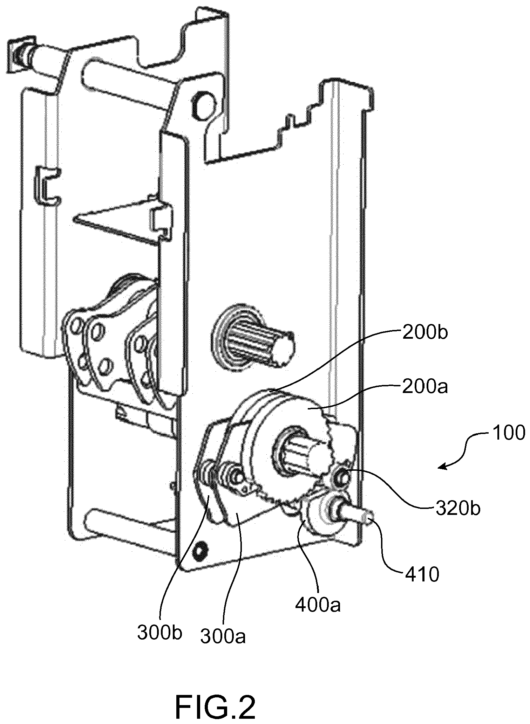

Le module de transmission décrit dans la présente invention est alors avantageusement mis en œuvre dans un mécanisme de commande d'un appareil électrique (par exemple de coupure de courant), du type interrupteur disjoncteur ou sectionneur (figure 2). Plus particulièrement, le module de transmission peut être mis en œuvre pour comprimer/réarmer le ressort de fermeture/d'ouverture de l'appareil électrique.

### REFERENCES

[1] EP 2 269 772
[2] US 4,423,649

## Revendications

1. Module de transmission (100) d'un effort comprenant :
- au moins une roue dentée (200) liée de manière fixe à un arbre principal (210) s'étendant selon un axe principal XX' ;
- au moins un premier porte-cliquet (300a) et un second porte-cliquet (300b) pourvus, respectivement, d'un premier cliquet (310a) et d'un second cliquet (310b), chacun des premier cliquet (310a) et second cliquet (310b) étant agencé pour, lorsqu'il est activé, entrainer la roue dentée en rotation selon un sens, dit sens direct, autour de l'axe principal par appui du cliquet considéré contre une dent de la roue dentée ; **caractérisé par**
- au moins deux cames, liées fixement entre elles, dites, respectivement, première came (400a) et seconde came (400b) agencées pour actionner, respectivement, le premier cliquet (310a) selon une première course angulaire autour d'un axe YY' de la première came (400a), et le second cliquet (310b) selon une seconde course angulaire autour de l'axe YY' de la seconde came (400b), différente de la première course angulaire.

2. Module selon la revendication 1, dans lequel la première course angulaire et la seconde course angulaire présentent un recouvrement nul, et leur somme fait 360°.

3. Module selon la revendication 1 ou 2, dans lequel la première course angulaire et la seconde course angulaire sont chacune égales à 180°.

4. Module selon l'une des revendications 1 à 3, dans lequel les au moins deux cames sont agencées pour que l'activation de l'un et/ou l'autre des premier et second cliquets (310b) par la came destinée à l'activer soit directement précédée d'une phase d'engagement dudit cliquet par cette même came, la phase d'engagement comprenant la mise en appui du cliquet considéré contre une dent de l'au moins une roue dentée (200) selon une course angulaire d'engagement de ladite came.

5. Module selon l'une des revendications 1 à 4, dans lequel les au moins deux cames sont agencées pour que l'activation de l'un et/ou l'autre des premier et second cliquets par la came destinée à l'activer soit directement suivie d'une phase de désengagement dudit cliquet par cette même came, la phase de désengagement comprenant une diminution de l'appui du cliquet contre la dent selon une loi de décroissance continue dudit appui selon une course angulaire de désengagement de ladite came.

6. Module selon l'une des revendications 1 à 5, dans lequel le premier porte-cliquet (300a) et le second porte-cliquet (300b) sont chacun en liaison pivot avec l'arbre principal (210).

7. Module selon l'une des revendications 1 à 6, dans lequel les au moins deux cames sont solidaires d'un arbre à cames (410) s'étendant selon l'axe YY' essentiellement parallèle à l'axe principal XX'.

8. Module selon l'une des revendications 1 à 7, dans lequel le premier porte-cliquet (300a) et le second porte-cliquet (300b) sont chacun pourvus d'un galet, dits respectivement, premier galet (320a) et second galet (320b), contre lesquels viennent en butée selon leur contour, respectivement, la première came (400a) et la seconde came (400b), la première came (400a) et la seconde came (400b) exerçant l'activation, respectivement, du premier cliquet (310a) et du second cliquet (310b), via respectivement le premier galet (320a) et le second galet (320b), et leurs porte-cliquets respectifs.

9. Module selon l'une des revendications 1 à 8, dans lequel l'au moins une roue dentée (200) comprend une première roue dentée et une seconde roue dentée, avantageusement identiques, agencées pour être entraînées en rotation, respectivement, par le premier cliquet (310a) et le second cliquet (310b).

10. Module selon l'une des revendications 1 à 9, dans lequel une révolution complète autour de l'axe YY' de l'ensemble formé par les première et seconde cames induit la rotation de l'au moins une roue dentée (200) selon une course angulaire correspondant à une dent de l'au moins une roue dentée (200).

11. Module selon l'une des revendications 1 à 10, dans lequel le module de transmission (100) comprend des moyens d'entrainement en rotation autour de l'axe YY' des au moins deux cames, les moyens d'entrainement comprennent avantageusement un moteur ou une manivelle.

12. Module selon l'une des revendications 1 à 11, dans lequel le premier porte-cliquet (300a) et/ou le second porte-cliquet (300b) sont également adaptés pour être manœuvrés de manière manuelle.

13. Module selon l'une des revendications 1 à 12, dans lequel l'arbre principal (210) comprend deux extrémités dont au moins une est destinée à transférer un effort mécanique à un système d'accumulation mécanique.

14. Module selon la revendication 13, dans lequel le système de d'accumulation mécanique comprend un ressort de compression.

15. Appareil électrique comprenant un module de transmission d'un effort selon l'une des revendications 1 à 14.

## Patentansprüche

1. Kraftübertragungsmodul (100), umfassend:
- mindestens ein Zahnrad (200), das fest mit einer Hauptwelle (210) verbunden ist, die sich entlang einer Hauptachse XX' erstreckt;
- mindestens einen ersten Sperrklinkenhalter (300a) und einen zweiten Sperrklinkenhalter (300b), die jeweils mit einer ersten Sperrklinke (310a) bzw. einer zweiten Sperrklinke (310b) versehen sind, wobei sowohl die erste Sperrklinke (310a) als auch die zweite Sperrklinke (310b) so angeordnet sind, dass sie bei Aktivierung das Zahnrad durch Anlage der betreffenden Sperrklinke an einen Zahn des Zahnrads in einer als Vorwärtsrichtung bezeichneten Richtung um die Hauptachse in Drehung versetzen; **gekennzeichnet durch**
- mindestens zwei Nocken, die fest miteinander verbunden sind und als erster Nocken (400a) bzw. zweiter Nocken (400b) bezeichnet werden und so angeordnet sind, dass sie jeweils die erste Sperrklinke (310a) über einen ersten Winkelhub um eine Achse YY' des ersten Nockens (400a) und die zweite Sperrklinke (310b) über einen zweiten Winkelhub, der sich von dem ersten Winkelhub unterscheidet, um die Achse YY' des zweiten Nockens (400b) betätigen.

2. Modul nach Anspruch 1, wobei der erste Winkelhub und der zweite Winkelhub keine Überlappung aufweisen und ihre Summe 360° beträgt.

3. Modul nach Anspruch 1 oder 2, wobei der erste Winkelhub und der zweite Winkelhub jeweils 180° betragen.

4. Modul nach einem der Ansprüche 1 bis 3, wobei die mindestens zwei Nocken so angeordnet sind, dass der Betätigung der einen und/oder der anderen der ersten und zweiten Sperrklinke (310b) durch den Nocken, der diese betätigen soll, unmittelbar eine Phase der Einrückung der Sperrklinke durch denselben Nocken vorausgeht, wobei die Einrückphase das Anlegen der betreffenden Sperrklinke an einen Zahn des mindestens einen Zahnrads (200) entlang eines Einrückwinkelhubs des Nockens umfasst.

5. Modul nach einem der Ansprüche 1 bis 4, wobei die mindestens zwei Nocken so angeordnet sind, dass der Aktivierung der einen und/oder der anderen der ersten und zweiten Sperrklinke durch den Nocken, der diese aktivieren soll, direkt eine Phase des Ausrückens dieser Sperrklinke durch denselben Nocken folgt, wobei die Ausrückphase eine Verringerung der Anlage der Sperrklinke an dem Zahn gemäß einem Gesetz der kontinuierlichen Abnahme der Anlage gemäß einem Ausrückwinkelhub des Nockens umfasst.

6. Modul nach einem der Ansprüche 1 bis 5, wobei der erste Sperrklinkenhalter (300a) und der zweite Sperrklinkenhalter (300b) jeweils mit der Hauptwelle (210) schwenkbar verbunden sind.

7. Modul nach einem der Ansprüche 1 bis 6, wobei die mindestens zwei Nocken einstückig mit einer Nockenwelle (410) verbunden sind, die sich entlang der Achse YY' im Wesentlichen parallel zur Hauptachse XX' erstreckt.

8. Modul nach einem der Ansprüche 1 bis 7, wobei der erste Sperrklinkenhalter (300a) und der zweite Sperrklinkenhalter (300b) jeweils mit einer Rolle versehen sind, die als erste Rolle (320a) bzw. zweite Rolle (320b) bezeichnet werden und an dem ersten Nocken (400a) und dem zweiten Nocken (400b) entsprechend ihren Konturen in Anlage gelangen, und der erste Nocken (400a) und der zweite Nocken (400b) die Aktivierung der ersten Sperrklinke (310a) bzw. der zweiten Sperrklinke (310b) über die erste Rolle (320a) bzw. die zweite Rolle (320b) und ihre jeweiligen Sperrklinkenhalter ausüben.

9. Modul nach einem der Ansprüche 1 bis 8, wobei das mindestens eine Zahnrad (200) ein erstes Zahnrad und ein zweites, vorteilhafterweise identisches Zahnrad umfasst, die so angeordnet sind, dass sie von der ersten Sperrklinke (310a) bzw. der zweiten Sperrklinke (310b) gedreht werden können.

10. Modul nach einem der Ansprüche 1 bis 9, wobei eine vollständige Umdrehung um die Achse YY' der durch den ersten und den zweiten Nocken gebildeten Anordnung die Drehung des mindestens einen Zahnrads (200) gemäß einem Winkelhub induziert, der einem Zahn des mindestens einen Zahnrads (200) entspricht.

11. Modul nach einem der Ansprüche 1 bis 10, wobei das Kraftübertragungsmodul (100) Drehantriebsmittel der mindestens zwei Nocken um die Achse YY' umfasst, wobei die Antriebsmittel vorteilhafterweise einen Motor oder eine Kurbel umfassen.

12. Modul nach einem der Ansprüche 1 bis 11, wobei der erste Sperrklinkenhalter (300a) und/oder der zweite Sperrklinkenhalter (300b) auch für eine manuelle Betätigung angepasst sind.

13. Modul nach einem der Ansprüche 1 bis 12, wobei die Hauptwelle (210) zwei Enden aufweist, von denen mindestens eines dazu bestimmt ist, eine mechanische Kraft auf ein mechanisches Speichersystem zu übertragen.

14. Modul nach Anspruch 13, wobei das mechanische Speichersystem eine Druckfeder umfasst.

15. Elektrisches Gerät mit einem Kraftübertragungsmodul nach einem der Ansprüche 1 bis 14.

## Claims

1. A load transmitting module (100) comprising:
- at least one toothed wheel (200) fixedly attached to a main shaft (210) extending along a main axis XX';
- at least a first pawl carrier (300a) and a second pawl carrier (300b) provided with a first pawl (310a) and a second pawl (310b) respectively, each of the first pawl (310a) and a second pawl (310b) being arranged, when activated, to rotatably drive the toothed wheel along a direction, called a forward direction, about the main axis by pressing the considered pawl against a tooth of the toothed wheel; **characterised by**
- at least two cams, fixedly attached to each other, called a first cam (400a) and a second cam (400b) respectively, arranged to respectively actuate the first pawl (310a) over a first angular stroke about an axis YY' of the first cam (400a), and the second pawl (310b) over a second angular stroke about the axis YY' of the second cam (400b), different from the first angular stroke.

2. The module according to claim 1, wherein the first angular stroke and the second angular stroke have a zero lap, and their sum is 360°.

3. The module according to claim 1 or 2, wherein the first angular stroke and the second angular stroke are each equal to 180°.

4. The module according to one of claims 1 to 3, wherein the at least two cams are arranged such that the activation of either of the first and second pawls (310b) by the cam for activating it is directly preceded by an engagement phase of said pawl by the same cam, the engagement phase comprising pressing the considered pawl against a tooth of the at least one toothed wheel (200) over an engagement angular stroke of said cam.

5. The module according to one of claims 1 to 4, wherein the at least two cams are arranged such that the activation of either of the first and second pawls by the cam for activating it is directly followed by a disengagement phase of said pawl by the same cam, the disengagement phase comprising decreasing pressing the pawl against the tooth according to a continuous decrease law of said pressing over a disengagement angular stroke of said cam.

6. The module according to one of claims 1 to 5, wherein the first pawl carrier (300a) and the second pawl carrier (300b) are each in a pivot connection with the main shaft (210).

7. The module according to one of claims 1 to 6, wherein the at least two cams are integral with a camshaft (410) extending along the axis YY' essentially parallel to the main axis XX'.

8. The module according to one of claims 1 to 7, wherein the first pawl carrier (300a) and the second pawl carrier (300b) are each provided with a roller, called a first roller (320a) and a second roller (320b) respectively, against which the first cam (400a) and the second cam (400b) abut over their perimeter respectively, the first cam (400a) and the second cam (400b) exerting the activation of the first pawl (310a) and the second pawl (310b) respectively, via the first roller (320a) and the second roller (320b) respectively, and their respective pawl carriers.

9. The module according to one of claims 1 to 8, wherein the at least one toothed wheel (200) comprises a first toothed wheel and a second toothed wheel, advantageously identical, arranged to be rotatably driven by the first pawl (310a) and the second pawl (310b) respectively.

10. The module according to one of claims 1 to 9, wherein a complete revolution about the axis YY' of the assembly formed by the first and second cams causes the at least one toothed wheel (200) to be rotated over an angular stroke corresponding to one tooth of the at least one toothed wheel (200).

11. The module according to one of claims 1 to 10, wherein the transmitting module (100) comprises means for rotatably driving about the axis YY' the at least two cams, the driving means advantageously comprise a motor or a crank.

12. The module according to one of claims 1 to 11, wherein the first pawl carrier (300a) and/or the second pawl carrier (300b) are also adapted to be manually operated.

13. The module according to one of claims 1 to 12, wherein the main shaft (210) comprises two ends at least one of which is for transferring a mechanical load to a mechanical storage system.

14. The module according to claim 13, wherein the mechanical storage system comprises a compression spring.

15. An electric apparatus comprising a load transmitting module according to one of claims 1 to 14.
